# EUROPEAN PATENT APPLICATION

(11) **EP 0 607 046 A2**
(43) Date of publication of application: **20.07.1994**
(21) Application number: 94300246.9
(22) Date of filing: 13.01.1994
(51) Int. Cl.: H04N 5/445, H04N 5/76, G04G 9/00, G04G 15/00

(54) **Apparatus for displaying time on a screen**

(30) Priority: 14.01.1993 JP 5070/93
(71) Applicant: KABUSHIKI KAISHA TOSHIBA, Kawasaki-shi, Kanagawa-ken 210 (JP); TOSHIBA AVE CO., LTD, Minato-ku, Tokyo 105 (JP)
(72) Inventor: Sasaki, Akira, c/o Intellectual Property Division, Minato-ku, Tokyo (JP); Inomata, Kaname, c/o Intellectual Property Div., Minato-ku, Tokyo (JP); Chiaki, Yutaja, c/o Intellectual Property Division, Minato-ku, Tokyo (JP)
(74) Representative: O'Connell, David Christopher

(57) **Abstract**

A display apparatus includes a display for displaying an analog clock image providing a time indication. The analog clock image includes a long hand and a short hand. An input device inputs time setting commands for moving the long hand of the analog clock image. A control circuit includes a control device responsive to the time setting commands for controlling the analog clock image on the display such that movement of the long and short hands is linked.

## Description

The present invention generally relates to display systems for displaying time on a screen, and more particularly, to a display apparatus which displays an analog clock image on a screen for a timer setting operation of, for instance, a video cassette recorder (VCR).

In a known timer setting system which is used in display apparatus such as VCRs and television sets, a digital clock is displayed on a screen. However, for people who have become accustomed to analog type clocks, it may be difficult to instantaneously judge the time displayed on the screen. This causes users of timer setting systems to feel that the timer setting operation is troublesome.

Japanese laid-open Patent No. S62-66779 describes a system in which an analog clock is displayed on a screen. In addition, Japanese laid-open Patent No. S1-107187 describes a system for producing display characters to display an analog clock.

However, even in this type of analog clock display, the operation for setting the start time and end time to set a timer is the same as that for setting a timer using a digital clock display. That is, the start time and end time must be pre-set by individual key inputs of hours and minutes. Since such operation is much different from operating an analog clock, it can lead to erroneous setting of the start time and end time.

It is therefore an object of the present invention to provide an apparatus for displaying an analog clock in which the setting of times can be carried out by a simple operation.

It is another object of the present invention to provide an analog clock display apparatus in which the hour and minute can be set by linking the movements of long and short hands of an analog clock image on a screen.

In accordance with the present invention, a display apparatus includes a display for displaying an analog clock image providing a time indication. The analog clock image includes a long hand and a short hand. An input device inputs time setting commands for moving the long hand of the analog clock image. A control circuit includes a control device responsive to the time setting commands for controlling the analog clock image on the display such that movement of the long and short hands is linked.

The above and other objects of the present invention will become clearer upon an understanding of the illustrative embodiment described below. Various advantages which may be not referred to herein will also occur to those skilled in the art upon employment of the present invention in practice.

Figure 1 is a block diagram illustrating a time display apparatus in accordance with an embodiment of the present invention.

Figure 2 is a block diagram illustrating the control circuit 13 of Figure 1 in detail.

Figure 3 is an illustration of the keyboard of key input circuit 20 of Figure 1.

Figure 4 is an illustration of an exemplary analog clock image displayed on the screen by the time display apparatus of Figure 1.

Figure 5 is a block diagram illustrating a time display apparatus in accordance with another embodiment of the present invention.

Figure 6 is an illustration of exemplary analog clock images displayed on the screen by the time display apparatus of Figure 5.

Figure 7 is an illustration of a time adjustment knob used for setting time in another embodiment of the present invention.

Representative embodiments of the present invention will now be explained with reference to the accompanying drawings.

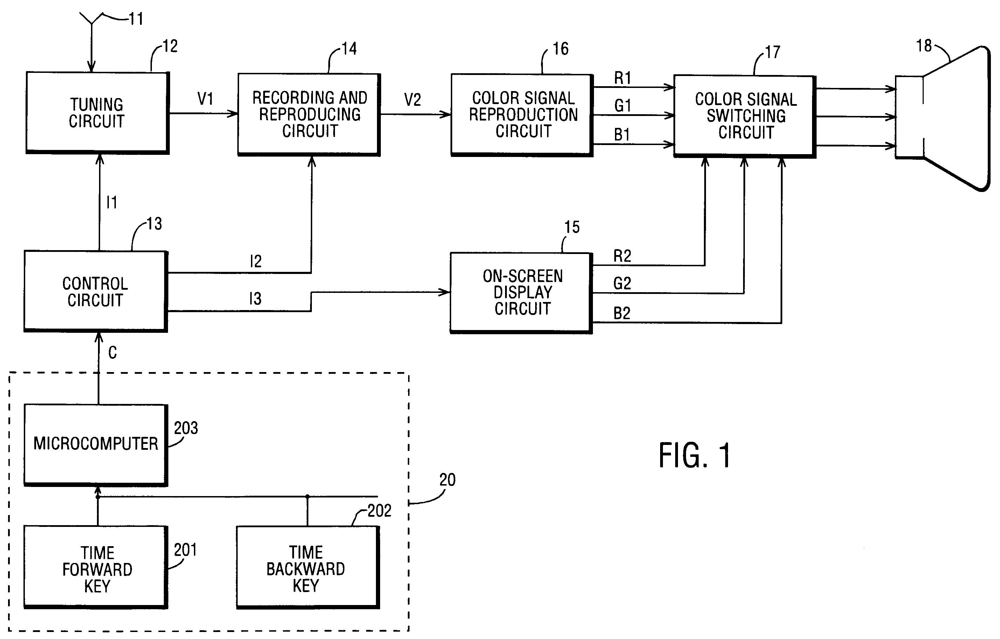

Figure 1 is a block diagram illustrating a time display apparatus in accordance with an embodiment of the present invention. Although this embodiment is described with reference to a television receiver having a built-in VCR, the invention is not limited in this respect. In the time display apparatus of Figure 1, television signals received by antenna 11 are supplied to tuning circuit 12. In tuning circuit 12, the video signal of a desired channel, which is designated by control circuit 13, is selected out of several television signals, and the extracted video signal is then amplified. Key input circuit 20 having a keyboard, which will be discussed below in detail, transmits command data (C) corresponding to the key inputs to control circuit 13 which includes a microcomputer. In response to such command data, control circuit 13 supplies instruction data (I1), (I2) and (I3) to tuning circuit 12, recording and reproducing circuit 14, and on-screen display circuit 15, respectively.

Recording and reproducing circuit 14 selectively functions in one of three operation modes in response to the instruction data (I2). In a mode in which the television receiver is to display images based on the video signal (V1) tuned by tuning circuit 12, recording and reproducing circuit 14 supplies the video signal (V1) as a display video signal (V2) to color signal reproduction circuit 16. In a recording mode, recording and reproducing circuit 14 converts the video signal (V1) to a frequency modulated (FM) signal and records it on magnetic tape. In a reproducing mode, recording and reproducing circuit 14 reproduces and demodulates the FM signal from the magnetic tape, and supplies the demodulated signal as the display video signal (V2) to color signal reproduction circuit 16.

In color signal reproduction circuit 16, the video signal (V2) supplied from recording and reproducing circuit 14 is resolved into primary color signals of red (R1), green (G1) and blue (B1). These color signals are supplied to respective input terminals of color signal switching circuit 17. On-screen display circuit 15 generates primary color signals of red (R2), green (G2) and blue (B2) for displaying an analog clock image on the screen based on the instruction data (I3), and these color signals (R2), (G2) and (B2) are supplied to the other input terminal of color signal switching circuit 17. Switching circuit 17 outputs the primary color signals supplied from one of color signal reproduction circuit 16 and on-screen display circuit 15, and supplies the signals to color picture tube 18. Color picture tube 18 displays a color image on the screen based on the primary color signals supplied from switching circuit 17.

The keyboard of key input circuit 20 includes a time forward key 201, a time backward key 202 and other keys (not shown). The signals generated by the actuation of these keys are detected by microcomputer 203. Microcomputer 203 produces the command data (C) in response to the signals and supplies the command data (C) to control circuit 13.

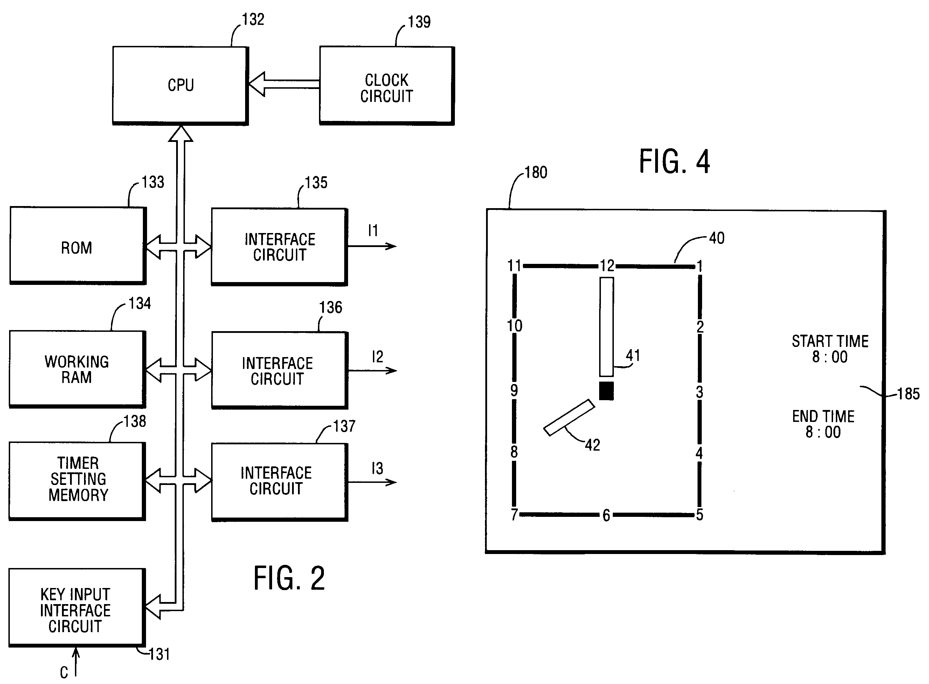

Figure 2 is a block diagram illustrating the control circuit 13 of Figure 1. Key input interface circuit 131 receives and temporarily stores the command data (C) supplied from key input circuit 20, and then supplies the command data to central processing unit (CPU) 132. CPU 132 reads program data from read only memory (ROM) 133 in accordance with the command data. In addition, CPU 132 supplies operation data to a buffer of working random access memory (RAM) 134. The operation data of working RAM 134 is processed by CPU 132 according to the program data to produce the instruction data (I1), (I2) and (I3). Instruction data (I1), (I2) and (I3) is supplied to interface circuits 135, 136 and 137, respectively. Interface circuits 135, 136, and 137 output instruction data (I1), (I2), and (I3) to tuning circuit 12, recording and reproducing circuit 14, and on-screen display circuit 15 of Figure 1, respectively.

The command data (C) which has timer setting information is processed by CPU 132 in the same manner as described above, and is then stored as timer setting data in timer setting memory 138. At the same time, CPU 132 is supplied with current time data from clock circuit 139 and compares the current time data with the timer setting data stored in timer setting memory 138. Thus, when the recording start time of the timer setting data coincides with the current time data, CPU 132 supplies interface circuit 136 with the instruction data (I2) which causes recording and reproducing circuit 14 to record the video data (V1). When the recording end time of the timer setting data coincides with the current time data, CPU 132 supplies interface circuit 136 with the instruction data (I2) which causes recording and reproducing circuit 14 to stop recording.

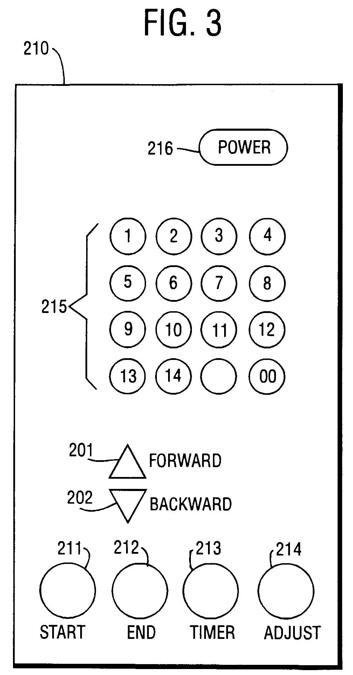

Figure 3 illustrates the keyboard of key input circuit 20 of Figure 1. Keyboard 210 includes time forward key 201 for moving a time on the screen forward, time backward key 202 for moving a time on the screen back, start key 211 for setting a start time, end key 212 for setting an end time, timer recording key 213 for starting the timer setting operation, adjustment key 214 for adjusting the current time, channel keys 215 for designating a channel and for directly inputting time in hours and minutes, power key 216 for switching on and off a power source supply and other keys (not shown) for operating the television receiver and the built-in VCR.

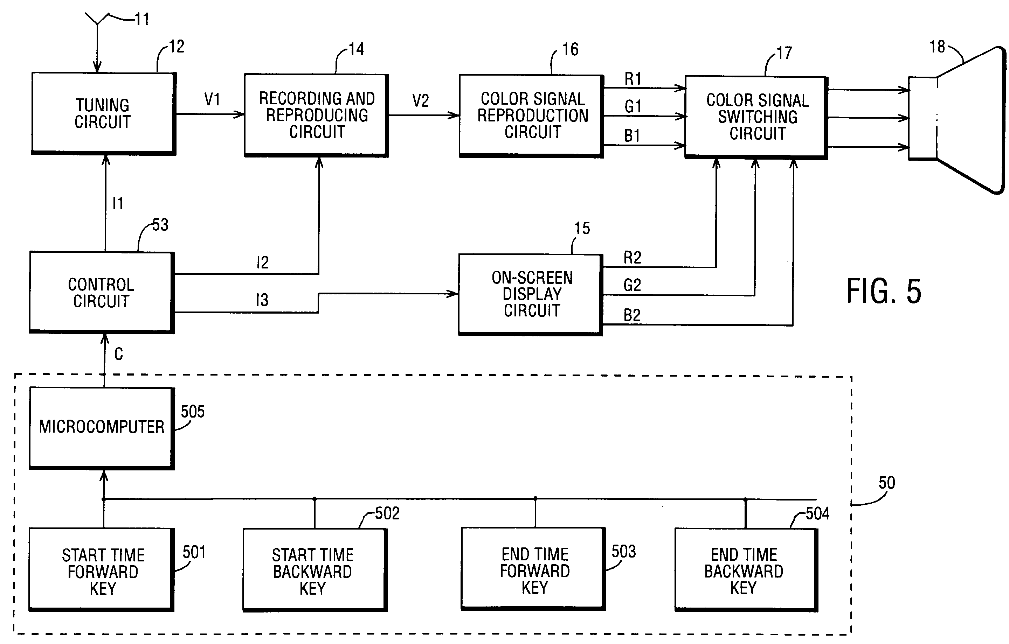

Figure 4 illustrates an example of analog clock image displayed on the screen in accordance with the present embodiment. The timer setting operation of the present embodiment will be explained with reference to Figures 1-4.

When timer recording key 213 is pressed, control circuit 13 supplies the instruction data (I3) which causes on-screen display circuit 15 to generate the color signals (R2), (G2) and (B2) for displaying the current time. Switching circuit 17 directs these color signals (R2), (G2) and (B2) from on-screen display circuit 15 to picture tube 18. By this means, analog clock image 40 of Figure 4 is displayed on the screen 180 of picture tube 18. Following this operation, start key 211 is pressed. When time forward key 201 is then pressed, control circuit 13 supplies the instruction data (I3) which causes on-screen display circuit 15 to alter the color signals so that long hand 41 of analog clock image 40 rotates clockwise. In other words, long hand 41 sequentially points to the numbers 1, 2, 3, ... 12, 1 ... on analog clock image 40. Thus, the minute setting of the start time may be advanced in 5-minute intervals. It will apparent that other intervals may be used and the invention is not limited in this respect. Every time long hand 41 points to 12 during the rotation of long hand 41, short hand 42 moves clockwise so as to sequentially point to the next number on analog clock image 40, for instance, 9, 10, 11, ... from the position in Figure 4. At the same time, the time data which is designated by short hand 42 and long hand 41 is stored in timer setting memory 138 of control circuit 13 as the start time of the timer setting data. In addition, control circuit 13 supplies the instruction data (I3) which causes on-screen display circuit 15 to produce the color signals for further displaying the start time in a digital form at digital display area 185 on screen 180.

The time on the analog clock may be moved back by pressing time backward key 202 whereby long hand 41 rotates counterclockwise and sequentially points to the numbers 12, 11, 10, ..., 1, 12, ... on analog clock image 40. Thus, the minute setting of the start time may be set backward in 5-minute intervals. It will be apparent that other intervals may be used and the invention is not limited in this respect. Every time long hand 41 points to 12, short hand 42 moves counterclockwise so as to sequentially point to the previous number on analog clock image 40, for instance, 7, 6, 5, ... in sequence. During this operation, every time long hand 41 moves, the start time data stored in timer setting memory 138 is updated.

After setting the start time, the operation for setting the end time is initiated by pressing end key 212. End time is designated on analog clock image 40 in the same manner as the setting of start time. The end time is stored in timer setting memory 138 in control circuit 13 and is also displayed in a digital form at digital display area 185 on screen 180, along with the start time.

In accordance with this embodiment, since the movements of long hand 41 and short hand 42 of analog clock image 40 are linked, the start time and end time can be set using either time forward key 201 or time backward key 202. Therefore, in the time display apparatus of this embodiment, timer setting can be accurately executed by a simple operation. Moreover, the time display apparatus displays time in a digital form, together with analog clock image 40. Further, a user can enter the start time and end time in hours and minutes by using channel keys 215 in addition to time forward key 201 and time backward key 202. Thus, users can choose preferable operation from the analog clock system and the digital clock system.

Figure 5 is a block diagram illustrating a time display apparatus in accordance with another embodiment of the present invention. This embodiment differs from the embodiment illustrated in Figure 1 with respect to key input circuit 50 and operation program of control circuit 53 which are used in place of key input circuit 20 and control circuit 13. In this embodiment, a keyboard (not shown) of key input circuit 50 includes start time forward key 501, start time backward key 502, end time forward key 503 and end time backward key 504 which are used in place of time forward key 201, time backward key 202, start key 211 and end key 212 of Figure 3. In addition, input signals of these keys and other keys in key input circuit 50 are detected by microcomputer 505 which supplies control circuit 53 with command data (C) in response to these input signals.

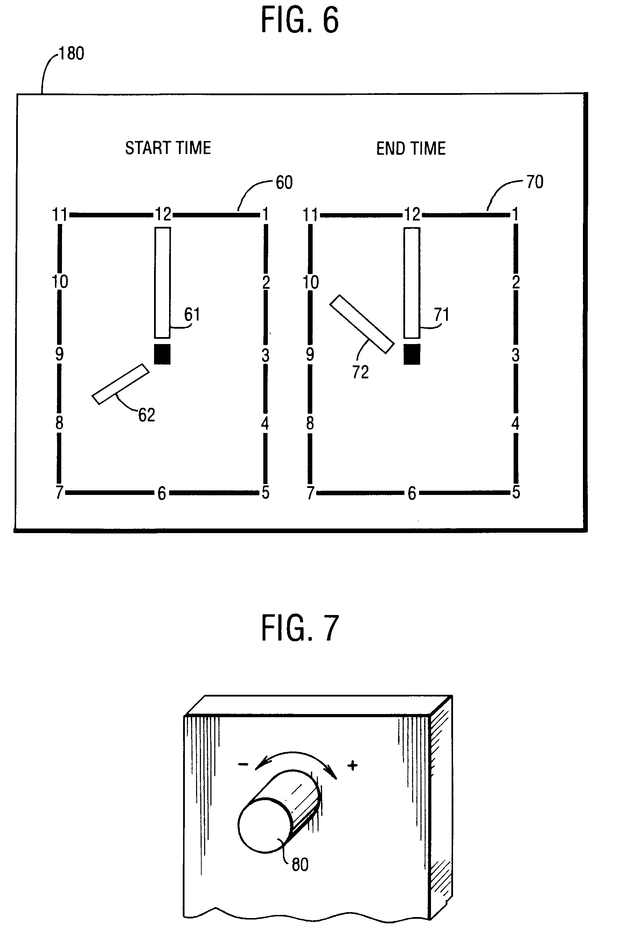

Figure 6 illustrates an example of analog clock images displayed on the screen in accordance with this embodiment. In the operation of this embodiment, when timer recording key is pressed, control circuit 53 supplies the instruction data (I3) which causes on-screen display circuit 15 to generate the color signals (R2), (G2) and (B2) for displaying two analog clock images 60 and 70 on screen 180. At this time, first analog clock image 60 shows the current time, while second analog clock image 70 shows time which is 2 hours later than the current time. At the same time, first time data which is designated by long hand 61 and short hand 62 of first analog clock image 60 is stored in timer setting memory 138 in control circuit 13 as start time data, and second time data which is designated by long hand 71 and short hand 72 of second analog clock image 70 is stored in timer setting memory 138 as end time data. Therefore, in this state, by only pressing a recording key (not shown), 2 hours recording can be executed immediately and easily. It will be apparent that other recording intervals may be used and the invention is not limited in this respect.

The time data stored in timer reservation memory 138 is updated by operation of start time forward key 501, start time backward key 502, end time forward key 503 and end time backward key 504. If start time forward and backward keys 501 and 502 are pressed, long hand 61 and short hand 62 of first analog clock image 60 move in the same manner as the movement of long hand 41 and short hand 42 of analog clock image 40 in Figure 4, and the start time data is updated. If end time forward and backward keys 503 and 504 are pressed, long hand 71 and short hand 72 of second analog clock image 70 move in the same manner as the movement of those of analog clock image 40, and end time data is updated.

According to this embodiment, in addition to simple operation provided for setting time during the timer setting operation, since start time and end time are displayed individually and simultaneously and are set by individual keys, erroneous operation, such as mistaken start time and end time, can be prevented.

Figure 7 is an illustration of a time adjustment knob used for setting time in accordance with another embodiment. In this embodiment, time adjustment knob 80 is provided on the keyboard and includes a rotation angle detection device for detecting operation of knob 80. When knob 80 is turned to the right, the time indicated by a long hand and a short hand of an analog clock image is advanced. When knob 80 is turned to the left, the time indicated by the long and short hands is moved backward. According to this embodiment, time setting on a screen can be executed by the same operation as in an analog clock. Thus, even a user who prefers analog clocks can set the timer easily.

While the above embodiments are applied to television receivers with built-in VCR, the present invention may be applied to other applications such as stand-alone VCRs and computer monitor systems.

As described above, the present invention provides an apparatus for displaying an analog clock in which time setting can be executed by simple operation. In addition, the present invention provides an analog clock display apparatus in which the hour and minute can be set by linking the movements of long and short hands together on a screen.

While the present invention has been illustrated and described in detail in the drawing and foregoing description, it will be recognized that changes and modifications can and will occur to those skilled in the art. It is therefore intended by the appending claims, to cover any such modifications as fall within the true spirit and scope of the invention.

## Claims

1. A display apparatus, comprising:
a display for displaying an analog clock image providing a time indication, said analog clock image including a long hand and a short hand;
input means for inputting time setting commands for moving said long hand of said analog clock image; and
a control circuit including control means responsive to said time setting commands for controlling the analog clock image on said display such that movement of said long and short hands is linked.

2. The display apparatus as claimed in claim 1, wherein said input means includes a first key for inputting a forward time setting command for moving said long hand clockwise and a second key for inputting a backward time setting command for moving said long hand counterclockwise.

3. The display apparatus as claimed in claim 1, wherein said input means includes a rotatable time adjustment knob for inputting a forward time setting command for moving said long hand clockwise when said knob is rotated in a first direction and for inputting a backward time setting command for moving said long hand counterclockwise when said knob is rotated in a second direction.

4. The display apparatus as claimed in claim 1, wherein said control circuit includes a memory for storing time data corresponding to said time indication provided by said analog clock image.

5. The display apparatus as claimed in claim 4, wherein said memory stores time data corresponding to a plurality of time indications provided by said analog clock image.

6. The display apparatus as claimed in claim 4, wherein said control circuit further comprises:
a clock for producing current time data representing a current time of day; and
comparing means for comparing said current time data and said time data stored in said memory and for generating a signal when said stored time data corresponds to said current time data.

7. The display apparatus as claimed in claim 6, wherein said signal generated by said comparing means corresponds to either a start time for VCR recording or an end time for VCR recording.

8. The display apparatus as claimed in claim 1, wherein said display comprises a screen of television receiver.

9. The display apparatus as claimed in claim 1, wherein said display further displays a digital clock image.

10. A display apparatus, comprising:
a display for simultaneously displaying first and second analog clock images providing respective time indications, each of said first and second analog clock images including a long hand and a short hand;
input means for inputting time setting commands for moving said long hands of said first and second analog clock image; and
a control circuit responsive to said time setting commands for controlling the first and second analog clock images on said display such that movement of said long and short hands of said first analog clock image is linked and movement of said long and short hands of said second analog clock image is linked.

11. The display apparatus as claimed in claim 10, wherein, prior to an input of time setting commands via said input means, said first analog clock image indicates a current time and said second analog clock image indicates a time later than said current time.

12. The display apparatus as claimed in claim 10, wherein said control circuit includes a memory for storing first and second time data respectively corresponding to time indications provided by said first and second analog clock images.

13. The display apparatus as claimed in claim 12, wherein said control circuit further comprises:
a clock for producing current time data representing a current time of day; and
comparing means for comparing said current time data and each of said first and second time data and generating a first signal when said current time data corresponds to said first time data and a second signal when said current time data corresponds to said second time data.

14. The display apparatus as claimed in claim 13, wherein said first signal corresponds to a start time for VCR recording and said second signal corresponds to an end time for VCR recording.

15. A timer setting apparatus for a video cassette recording device, comprising:
a display for displaying an analog clock image providing a time indication, said analog clock image including a long hand and a short hand;
input means for inputting time setting commands for moving said long hand of said analog clock image; and
a control circuit including
control means responsive to said time setting commands for controlling the analog clock image on said display means such that movement of said long and short hands is linked;
a memory for storing first and second time data respectively corresponding to first and second time indications provided on said analog clock image;
a clock for generating current time data corresponding to a current time of day; and
comparing means for comparing said current time data with said first time data and generating a signal for starting VCR recording when said current time data corresponds to said first time data, and for comparing said current time data with said second time data and generating a signal for ending VCR recording when said current time data corresponds to said second time data.

16. The timer setting apparatus as claimed in claim 15, wherein said display displays a digital time image corresponding to said analog clock image and said input means includes a numeric keypad for inputting time setting commands to set said digital time image.
